# EUROPÄISCHE PATENTSCHRIFT

(11) **EP 0 636 111 B1**
(45) Veröffentlichungstag und Bekanntmachung des Hinweises auf die Patenterteilung: **22.07.1998**
(21) Anmeldenummer: 93911453.4
(22) Anmeldetag: 08.04.1993
(51) Int. Cl.: C04B 35/00

(54) **VERFAHREN ZUR HERSTELLUNG OBERFLÄCHENMODIFIZIERTER NANOSKALIGER KERAMISCHER PULVER**
METHOD OF MANUFACTURING SURFACE-MODIFIED CERAMIC POWDERS WITH PARTICLES IN THE NANOMETRE SIZE
PROCEDE DE FABRICATION DE POUDRES CERAMIQUES MODIFIEES EN SURFACE A GRANULOMETRIE NANOMETRIQUE

(30) Priorität: 15.04.1992 DE 4212633
(43) Veröffentlichungstag der Anmeldung: 01.02.1995
(73) Patentinhaber: INSTITUT FÜR NEUE MATERIALIEN gemeinnützige GmbH, 66123 Saarbrücken (DE)
(72) Erfinder: NASS, Rüdiger, D-6601 Riegelsberg (DE); SCHMIDT, Helmut, D-6604 Saarbrücken-Güdingen (DE); SCHMITT, Peter, D-6601 Heusweiler (DE)
(74) Vertreter: Barz, Peter, Dr.
(86) Internationale Anmeldenummer: EP9300871
(87) Internationale Veröffentlichungsnummer: WO9321127

(56) Entgegenhaltungen:
- EP-A- 0 200 487
- WO-A-90/03838
- US-A- 3 945 945
- CHEMICAL ABSTRACTS, vol. 111, no. 24, 11. Dezember 1989, Columbus, Ohio, US; abstract no. 218303h, ZUBOWA ET AL. 'THE PREPARATION OF GAMMA-ALUMINA GREEN BODIES WITH DEFINED PORE STRUCTURE' Seite 246 ;Spalte R ; & CHEM. TECH. Vol. 41, No. 9, LEIPZIG, GERMANY, pages 387 - 391
- CHEMICAL ABSTRACTS, vol. 104, Columbus, Ohio, US; abstract no. 51534a, 'CERAMIC POWDERS WITH MODIFIED SURFACES' Seite 28 ;Spalte R ; & JP,A,60 123 560 (KAO CORP.) 2 July 1985

## Beschreibung

Die vorliegende Erfindung betrifft ein Verfahren zur Herstellung oberflächenmodifizierter nanoskaliger keramischer Pulver. Insbesondere betrifft die vorliegende Erfindung ein Verfahren der genannten Art, mit dem sich der Agglomerationszustand nanoskaliger Partikel in einer Suspension kontrollieren läßt und das demgemäß zur Herstellung von Suspensionen bzw. Massen mit hohen Feststoffgehalten herangezogen werden kann.

Unter "nanoskaligen Teilchen" bzw. "nanoskaligen Pulvern" sollen im folgenden Teilchen bzw. Pulver verstanden werden, bei denen die durchschnittliche Teilchengröße nicht mehr als 100 nm, insbesondere nicht mehr als 50 nm und besonders bevorzugt nicht mehr als 30 nm beträgt.

Bei der Verarbeitung von nanodispersen Materialien (Teilchen, Pulvern) existieren im wesentlichen zwei Probleme, nämlich:
- (a): die Kontrolle der Teilchenagglomeration bei der Verarbeitung dieser Materialien und
- (b): die Herstellung von verarbeitungsfähigen keramischen Massen mit hohen Feststoffgehalten.

Hinsichtlich des Problems (a) ist festzustellen, daß beim Übergang von sub-mikron zu nanoskaligen keramischen Pulvern allgemein eine Zunahme der Agglomeration beobachtet wird. Dies ist darauf zurückzuführen, daß mit abnehmender Teilchengröße auch schwache Wechselwirkungskräfte, wie z.B. die van der Waals-Kräfte, erheblich an Bedeutung gewinnen bzw. dominieren. Hinzu kommt, daß die Partikeloberfläche immer mit funktionellen, d.h. kondensationsfähigen, Gruppen belegt ist. Diese sind bei konventionellen Submikronpulvern nur insoweit von Bedeutung, als sie als Wechselwirkungszentren für erforderliche organische Prozeßhilfsmittel (Dispergierhilfsmittel, Bindemittel, usw.) herangezogen werden können. Aufgrund des großen Oberflächen-zu-Volumen-Verhältnisses bei nanodispersen Materialien kommt den Oberflächengruppen aber auch in einer anderen Hinsicht große Bedeutung zu. Zum einen können sie ebenfalls als Reaktionszentren für organische Prozeßhilfsmittel dienen. Zum anderen können sie aber auch durch Kondensationsreaktionen zwischen einzelnen Partikeln zur Bildung harter Agglomerate führen. Die Partikel sind dann quasi über Sinterhälse miteinander verbunden. Es ist daher wünschenswert, Verfahren zu entwickeln, mit denen die Agglomeration soweit zu beherrschen ist, daß kontrolliert agglomerierte Pulver erhalten werden können. Des weiteren wäre es günstig, wenn mit diesen Verfahren die reaktive Oberfläche nach außen abgeschirmt und so eine interpartikuläre Kondensation verhindert werden könnte.

Zum obigen Problem (b) kann bemerkt werden, daß die Herstellung von keramischen Massen mit hohen Feststoffgehalten und auf ein Formgebungsverfahren abgestimmten Verarbeitungseigenschaften erhebliche Schwierigkeiten bereitet. Zur Vermeidung von Agglomeraten, die in grünen wie auch in gesinterten Körpern zu gravierenden Defekten führen können, wird allgemein in Suspensionen gearbeitet. Zur Suspensionsstabilisierung werden Dispergierhilfsmittel zugesetzt, die die Aufgabe haben, eine Agglomeration zu verhindern und der Suspension die benötigten Verarbeitungseigenschaften zu verleihen. Bei der Suspensionsstabilisierung können zwei prinzipielle Möglichkeiten unterschieden werden, nämlich die elektrostatische und die sterische Stabilisierung. Die elektrostatische Stabilisierung hat den Nachteil, daß aufgrund des großen hydrodynamischen Radius der suspendierten Partikel nur geringe Feststoffgehalte realisiert werden können. Demgegenüber bietet die sterische Stabilisierung die prinzipielle Möglichkeit, Suspensionen mit hohen Feststoffgehalten aus nanoskaligen Materialien herzustellen, da hier der hydrodynamische Partikelradius viel kleiner ist.

Die Vorteile der sterischen Stabilisierung wurden am Beispiel von nanodispersem SiO₂ bereits gezeigt. Als Dispergierhilfsmittel wurden hier allgemein nicht-ionische organische Polymere (z.B. Polymethylmethacrylat) eingesetzt, die auf der Partikeloberfläche adsorbiert werden. Der Nachteil einer derartigen Stabilisierung ist, daß auch hiermit nur maximale Feststoffgehalte von ca. 20 bis 30 Vol.-% realisierbar sind und eine Übertragbarkeit auf von SiO₂ verschiedene Stoffsysteme nur mit erheblichen Einschränkungen möglich ist. Dies liegt vor allem daran, daß die für ein Material spezifischen oberflächenchemischen Eigenschaften (z.B. saure/basische Eigenschaften) nicht ohne weiteres auf ein anderes Material übertragen werden können.

Es ist daher ebenfalls wünschenswert, ein Verfahren bereitzustellen, mit dem es möglich ist, die Partikeloberfläche durch entsprechende chemische Verbindungen so zu modifizieren, daß die Partikel gegenüber interpartikulären Kondensationsreaktionen abgeschirmt werden, so daß ein optimaler Dispergiergrad erreicht und hohe Feststoffgehalte der Dispersion realisiert werden können.

EP-A-200 487 beschreibt ein Verfahren zur Herstelllung von beständigen keramischen Schleifkörnern auf Basis von α-Aluminiumoxidmonohydrat, bei dem ein Nukleierungsmittel eingesetzt wird. Es wird erwähnt, daß der zu diesem Zweck als Ausgangsmaterial eingesetzten Boehmit-Dispersion üblicherweise ein Peptisierungsmittel zugesetzt wird, um ein stabileres Hydrosol oder eine stabilere kolloidale Dispersion zu erhalten. Neben konkreten Säuren wie Salzsäure, Essigsäure und Ameisensäure wird Salpetersäure als bevorzugtes Peptisiermittel genannt.

WO 90/03838 ist auf ein Verfahren zur Herstellung keramischer Pulver gerichtet, die sich für das Pressen zu Gegenständen eignen. Zu diesem Zweck wird ein teilchenförmiges keramisches Material mit einer Teilchengröße von vorzugsweise unter 1 µm in Gegenwart von NH₃ oder einem Alkylamin mit einem Siedepunkt unter demjenigen von Wasser in Wasser dispergiert und die Dispersion sprühgetrocknet.

Der vorliegenden Erfindung liegt die Aufgabe zugrunde, ein Verfahren bereitzustellen, mit dessen Hilfe die oben erläuterten Probleme (a) und (b) gelöst werden können.

Erfindungsgemäß wird diese Aufgabe gelöst durch ein Verfahren zur Herstellung oberflächenmodifizierter nanoskaliger keramischer Pulver mit einer durchschnittlichen Teilchengröße von nicht mehr als 100 nm, das dadurch gekennzeichnet ist, daß man das unmodifizierte Pulver mit einer durchschnittlichen Teilchengröße von nicht mehr als 100 nm in Anwesenheit mindestens einer organischen Verbindung mit einem Molekulargewicht von nicht mehr als 500 (im folgenden auch als "niedrigmolekulare organische Verbindung" bezeichnet), die über mindestens eine funktionelle Gruppe verfügt, die mit den Oberflächengruppen der Pulverteilchen reagieren und/oder wechselwirken kann, in Wasser und/oder einem organischen Lösungsmittel dispergiert und daraufhin das Dispergiermittel gegebenenfalls ganz oder teilweise entfernt.

Als unmodifizierte keramische Materialien (dichte nanoskalige Partikel), die im erfindungsgemäßen Verfahren eingesetzt werden können, eignen sich insbesondere (gemischte) Metalloxide, wie z.B. (gegebenenfalls hydratisiertes) Al₂O₃, teil- und vollstabilisiertes ZrO₂, Mullit, Cordierit, Perowskite, z.B. BaTiO₃, PZT, PLZT usw. Beispiele für andere geeignete Ausgangsmaterialien sind Nichtoxide, wie z.B. Carbide, Nitride, Boride und Carbonitride. Konkrete Beispiele hierfür sind SiC, Si₃N₄, B₄C, BN, TiB₂, TiN, TiC und Ti(C,N). Selbstverständlich können auch Mischungen von Oxiden bzw. Nichtoxiden und Mischungen aus Oxiden und Nichtoxiden eingesetzt werden.

Ein erfindungsgemäß besonders bevorzugtes keramisches Ausgangsmaterial ist Böhmit (γ-AlO(OH)).

Als Oberflächenmodifikator, d.h. als oberflächenmodifizierende niedrigmolekulare organische (= kohlenstoffhaltige) Verbindung, die über mindestens (und vorzugsweise) eine funktionelle Gruppe verfügt, die mit an der Oberfläche der Pulverteilchen vorhandenen Gruppen reagieren und/oder (zumindest) wechselwirken kann, eignen sich insbesondere Verbindungen mit einem Molekulargewicht, das nicht höher als 350, vorzugsweise nicht höher als 200 ist. Derartige Verbindungen sind vorzugsweise unter Normalbedingungen flüssig und im Dispergiermedium löslich oder zumindest emulgierbar.

Derartige Verbindungen weisen vorzugsweise nicht mehr als insgesamt 15, insbesondere nicht mehr als insgesamt 10 und besonders bevorzugt nicht mehr als 8 Kohlenstoffatome auf. Die funktionellen Gruppen, die diese Verbindungen tragen müssen, richten sich in erster Linie nach den Oberflächengruppen des jeweils eingesetzten keramischen Ausgangsmaterials und darüber hinaus auch nach der gewünschten Wechselwirkung. Besonders bevorzugt wird es, wenn zwischen den funktionellen Gruppen der oberflächenmodifizierenden Verbindung und den Oberflächengruppen der keramischen Partikel eine Säure/Base-Reaktion nach Bronsted oder Lewis stattfinden kann (einschließlich Komplexbildung und Adduktbildung). Ein Beispiel für eine andere geeignete Wechselwirkung ist die Dipol-Dipol-Wechselwirkung.

Beispiele für bevorzugte funktionelle Gruppen sind somit Carbonsäuregruppen, (primäre, sekundäre und tertiäre) Aminogruppen und C-H-acide Gruppierungen. Es können auch mehrere dieser Gruppen gleichzeitig in einem Molekül vorhanden sein (Betaine, Aminosäuren, EDTA, usw.).

Demgemäß sind Beispiele für besonders bevorzugte Oberflächenmmodifikatoren gesättigte oder ungesättigte Mono- und Polycarbonsäuren (vorzugsweise Monocarbonsäuren) mit 1 bis 12 Kohlenstoffatomen (z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure und Fumarsäure). Eine besonders bevorzugte Monocarbonsäure ist Propionsäure. Bei den ungesättigten Carbonsäuren besteht zusätzlich die Möglichkeit, daß mit Hilfe der ethylenisch ungesättigten Doppelbindung eine Vernetzung durchgeführt werden kann.

Beispiele für weitere geeignete Oberflächenmodifikatoren sind Mono- und Polyamine, insbesondere solche der allgemeinen Formel R₃₋ₙNHₙ, worin n = 0, 1 oder 2 und die Reste R unabhängig voneinander Alkylgruppen mit 1 bis 12, insbesondere 1 bis 6 und besonders bevorzugt 1 bis 4 Kohlenstoffatomen darstellen (z.B. Methyl, Ethyl, n- und i-Propyl und Butyl) und Ethylenpolyamine (z.B. Ethylendiamin, Diethylentriamin etc.); β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁-C₄-Alkylester; Organoalkoxysilane, wie z.B. diejenigen, die zur Oberflächenmodifizierung von kolloidaler Kieselsäure eingesetzt werden (z.B. solche der allgemeinen Formel R₄₋ₘSi(OR')ₘ worin die Gruppen R and R' unabhängig voneinander C₁-C₄-Alkyl darstellen und m 1, 2, 3 oder 4 ist); und modifizierte Alkoholate, bei denen ein Teil der OR-Gruppen (R wie oben definiert) durch inerte organische Gruppen substituiert ist und über die noch vorhandenen OR-Gruppen eine Anbindung (Kondensation) auf der Partikeloberfläche erfolgt und die organischen Gruppen die Abschirmung übernehmen. Beispiele hierfür sind z.B. Zirkonund Titanalkoholate M(OR)₄ (M = Ti, Zr), bei denen ein Teil der OR-Gruppen durch einen Komplexbildner, wie z.B. eine ß-Dicarbonylverbindung oder eine (Mono)carbonsäure ersetzt ist. Wird eine ethylenisch ungesättigte Verbindung (wie z.B. Methacrylsäure) als Komplexbildner eingesetzt, kann darüber hinaus auch eine Vernetzung stattfinden (siehe oben).

Als Dispergiermedium werden vorzugsweise Wasser und/oder organische Lösungsmittel eingesetzt. Ein besonders bevorzugtes Dispergiermedium ist destilliertes (reines) Wasser. Als organische Lösungsmittel eignen sich sowohl polare als auch unpolare und aprotische Lösungsmittel. Beispiele hierfür sind Alkohole, wie z.B. aliphatische Alkohole mit 1 bis 6 Kohlenstoffatomen (insbesondere Methanol, Ethanol, n- und i-Propanol und Butanol); Ketone, wie z.B. Aceton und Butanon; Ester, wie z.B. Essigsäureethylester; Ether, wie z.B. Diethylether, Tetrahydrofuran und Tetrahydropyran; Amide, wie z.B. Dimethylacetamid und Dimethylformamid; Sulfoxide und Sulfone, wie z.B. Sulfolan und Dimethylsulfoxid; und aliphatische (gegebenenfalls halogenierte) Kohlenwasserstoffe, wie z.B. Pentan, Hexan und Cyclohexan. Selbstverständlich können auch Mischungen derartiger Lösungsmittel eingesetzt werden.

Das eingesetzte Dispergiermedium hat vorzugsweise einen Siedepunkt, der eine problemlose Entfernung desselben durch Destillation (gegebenenfalls unter Vakuum) ermöglicht. Bevorzugt werden Lösungsmittel mit einem Siedepunkt unter 200°C, insbesondere unter 150°C.

Bei der Durchführung des erfindungsgemäßen Verfahrens beträgt der Gehalt an Dispergiermedium im allgemeinen 40 bis 90, vorzugsweise 50 bis 80 und insbesondere 55 bis 75 Gew.-%. Der Rest der Dispersion setzt sich aus Ausgangspulver und niedrigmolekularer organischer Verbindung (Oberflächenmodifikator) zusammen. Dabei beträgt das Gewichtsverhältnis keramisches Pulver/Oberflächenmodifikator im allgemeinen 100:1 bis 4:1, insbesondere 50:1 bis 8:1 und besonders bevorzugt 25:1 bis 10:1.

Das erfindungsgemäße Verfahren wird vorzugsweise bei einer Temperatur von Raumtemperatur (ca. 20°C) bis zur Siedetemperatur des Dispergiermediums durchgeführt. Besonders bevorzugt sind Dispergiertemperaturen im Bereich von 50 bis 100°C.

Die Dispergierzeit hängt insbesondere von der Art der eingesetzten Materialien ab, beträgt aber im allgemeinen einige Minuten bis mehrere Stunden, z.B. 1 bis 24 Stunden.

Nach Beendigung der Oberflächenmodifizierung kann die erhaltene Dispersion (Suspension) entweder als solche weiterverarbeitet werden (siehe unten) oder das Dispergiermedium wird ganz oder teilweise (z.B. bis zu einer gewünschten Feststoffkonzentration) entfernt. Ein besonders bevorzugtes Verfahren zur Entfernung des Dispergiermediums (insbesondere wenn das Dispergiermedium Wasser umfaßt) ist die Gefriertrocknung.

Die nach dem erfindungsgemäßen Verfahren erhaltene Suspension bzw. das trockene oberflächenmodifizierte nanoskalige keramische Pulver kann dann zwecks Herstellung von Grünkörpern bzw. Sinterkörpern weiter verarbeitet werden. Eine besonders bevorzugte Weiterverarbeitung ist die Herstellung von Extrusionsmassen, die nach der Extrusion zu fertigen Formkörpern gesintert werden können. Hierbei geht man gewöhnlich so vor, daß man pro 100 Gew.-Teile Extrusionsmasse 20 bis 80, insbesondere 30 bis 70 und besonders bevorzugt 40 bis 60 Gew.-Teile oberflächenmodifiziertes Pulver (entweder als solches oder in Form einer z.B. wie oben hergestellten Dispersion), 10 bis 70, insbesondere 20 bis 60 und besonders bevorzugt 30 bis 50 Gew.-Teile Dispergiermedium und 0,5 bis 20, insbesondere 2 bis 15, besonders bevorzugt 5 bis 10 Gew.-Teile Additive, die aus Bindemitteln, Plastifiziermitteln und Mischungen davon ausgewählt werden, einsetzt.

Die erwähnten Bindemittel und Plastizifiermittel werden vorzugsweise aus modifizierten Cellulosen (z.B. Methylcellulose, Ethylcellulose, Propylcellulose und Carboxy-modifizierte Cellulose), Polyalkylenglykolen (insbesondere Polyethylenglykol und Polypropylenglykol, vorzugsweise mit einem durchschnittlichen Molekulargewicht von 400 bis 50.000), Dialkylphthalaten (z.B. Dimethylphthalat, Diethylphthalat, Dipropylphthalat und Dibutylphthalat) und Mischungen dieser Substanzen ausgewählt. Selbstverständlich können auch andere Binde- und Plastifiziermittel eingesetzt werden, wie z.B. Polyvinylalkohol etc.

Die obigen Bindemittel und Plastifiziermittel werden benötigt, um eine extrusionsfähige Masse und eine ausreichende Formstabilität nach der Formgebung zu gewährleisten.

Nach gründlicher Durchmischung der obigen Komponenten (z.B. in einer herkömmlichen Mischvorrichtung) kann ein Teil des Dispergiermediums (vorzugsweise im Vakuum) wieder entfernt werden, bis die Extrusionsmasse den gewünschten Feststoffgehalt aufweist. Bevorzugte Feststoffgehalte der Extrusionsmasse liegen bei mindestens 30 und insbesondere mindestens 40 Vol.-%.

Nach der Extrusion kann der extrudierte Formkörper in herkömmlicher Weise getrocknet und daraufhin zum fertigen Sinterkorper weiterverarbeitet werden. Die in der obigen Weise hergestellten extrudierten Körper sind in der Regel durchscheinend (transluzent) und können rißfrei getrocknet werden.

Das erfindungsgemäße Verfahren ermöglicht es, die Agglomeration von nanoskaligen keramischen Pulvern zu kontrollieren, wodurch es möglich wird, Dispersionen derartiger Teilchen mit hohen Feststoffgehalten in zufriedenstellender Weise herzustellen.

Die folgenden Beispiele dienen der weiteren Erläuterung der vorliegenden Erfindung, ohne diese jedoch zu beschränken. In diesen Beispielen wurde handelsübliches Böhmitpulver (Dispersal Alumina, Hersteller Fa. Condea) eingesetzt, dessen Agglomeratgröße zu 83,4% unter 25 µm lag. Die Primärpartikelgröße des Pulvers lag bei 10 bis 15 nm.

### BEISPIEL 1

### Herstellung eines mit 10 Gew.-% Propionsäure oberflächenmodifizierten Böhmitpulvers

Aus 72,5 Gew.-% destilliertem Wasser, 2,5 Gew.-% Propionsäure und 25 Gew.-% Böhmitpulver wurde eine Suspension hergestellt, die daraufhin unter Rückfluß bei ständigem Rühren 16 Stunden lang erhitzt wurde. Danach wurde die Suspension abgekühlt und über einen Gefriertrocknungsvorgang (-20°C, 20 kPa) in ein Pulver aus oberflächenmodifizierten Böhmitpartikeln überführt.

### BEISPIEL 2

### Herstellung von mit 5 Gew.-% Propionsäure oberflächenmodifiziertem Böhmitpulver

Aus 73,75 Gew.-% destilliertem Wasser, 1,25 Gew.-% Propionsäure und 25,0 Gew.-% Böhmitpulver wurde eine Suspension hergestellt, die anschließend 16 Stunden unter ständigem Rühren am Rückfluß erhitzt wurde. Daraufhin wurde die Suspension abgekühlt und über einen Gefriertrocknungsvorgang (-20°C, 20 kPa) in ein Pulver aus oberflächenmodifizierten Böhmitpartikeln überführt.

### BEISPIEL 3

### Herstellung von Extrusionsmassen aus gefriergetrocknetem oberflächenmodifiziertem Böhmitpulver

Zur Herstellung von strukturviskosen hochkonzentrierten Böhmitpasten aus gefriergetrocknetem oberflächenmodifiziertem Böhmitpulver wurden folgende Komponenten eingesetzt:
- oberflächenmodifiziertes Böhmitpulver (ca. 6 Gew.-% Propionsäure)
- destilliertes Wasser (30 bis 35 Gew.-%)
- modifizierte Cellulosen (2 bis 3 Gew.-%)
- Polyethylenglykole unterschiedlichen Molekulargewichts (2 bis 7 Gew.-%)
- Dialkylphthalate (0 bis 2 Gew.-%).

In einem konkreten Beispiel wurde aus 59 Gew.-% des obigen oberflächenmodifizierten Böhmitpulvers, 35 Gew.-% destilliertem Wasser, 2 Gew.-% Methylcellulose, 2 Gew.-% Polyethylenglykol (durchschnittliches Molekulargewicht <10.000) und 2 Gew.-% Dibutylphthalat eine Paste hergestellt. Zu diesem Zweck wurden dem Böhmitpulver in einem auf 50°C vorgeheizten Kneter die entsprechenden Zuschlagstoffe zugegeben, nachdem diese in dem auf 50°C erwärmten destillierten Wasser aufgelöst worden waren. Nach Evakuierung der Mischkammer (Druck <10 kPa) wurde nach einigen Minuten eine hochkonzentrierte, transluzente extrusionsfähige Böhmitpaste erhalten. Es wurden Feststoffgehalte von über 40 Vol.-% erreicht.

### BEISPIEL 4

### Herstellung von Extrusionsmassen aus modifizierten Böhmitsuspensionen

Zur Herstellung von strukturviskosen hochkonzentrierten Böhmitpasten aus Böhmitsuspensionen wurden folgende Komponenten eingesetzt:
- Böhmitsuspensionen (mit 5 oder 10 Gew.-% Propionsäure modifizierte Böhmitpulver)
- modifizierte Cellulosen (2 bis 3 Gew.-%)
- Polyethylenglykole unterschiedlichen Molekulargewichts (2 bis 7 Gew.-%)
- Dialkylphthalate (0 bis 2 Gew.-%).

In einem konkreten Beispiel wurde aus 91 Gew.-% der in Beispiel 1 oder Beispiel 2 hergestellten Böhmitsuspension, 2 Gew.-% Methylcellulose, 3 Gew.-% Polyethylenglykol (durchschnittliches Molekulargewicht unter 600), 3 Gew.-% Polyethylenglykol (durchschnittliches Molekulargewicht ca. 6.000) und 1 Gew.-% Dibutylphthalat eine Böhmitpaste hergestellt. Zu diesem Zweck wurden der Böhmitsuspension in einem auf 50°C vorgeheizten Kneter die entsprechenden Additive direkt zugegeben. Nach Abziehen des überschüssigen Wassers durch Evakuierung der Mischkammer (Druck <10 kPa) erhielt man eine hochkonzentrierte extrusionsfähige Böhmitpaste. Es wurden Feststoffgehalte von über 40 Vol.-% erreicht.

### BEISPIEL 5

### Extrusion von hochkonzentrierten nanokristallinen Böhmitpasten

Zur Extrusion der in den Beispielen 3 und 4 hergestellten Böhmitpasten wurde ein Kolbenextruder mit einem Kolbendurchmesser von 50 mm verwendet. Es wurden bei einer Temperatur von 50°C Rohre mit einem Außendurchmesser von 16 mm und einer Wandstärke von 2 mm extrudiert. Die rißfreien und homogenen Rohre zeigten ein hohes transluzentes Verhalten.

### BEISPIEL 6

### Trocknung nanokristalliner Böhmitrohre

Die in Beispiel 5 hergestellten extrudierten Rohre wurden durch Gefriertrocknung (20 kPa, -20°C) innerhalb von 24 Stunden in Grünkörper überführt, die rißfrei und nicht verzogen waren. Die Trocknungsschwindung betrug maximal 5% bei einem Feuchtigkeitsverlust von ca. 25 Gew.-%.

## Patentansprüche

1. Verfahren zur Herstellung oberflächenmodifizierter nanoskaliger keramischer Pulver mit einer durchschnittlichen Teilchengröße von nicht mehr als 100 nm, dadurch gekennzeichnet, daß man das unmodifizierte Pulver mit einer durchschnittlichen Teilchengröße von nicht mehr als 100 nm in Anwesenheit mindestens einer organischen Verbindung mit einem Molekulargewicht von nicht mehr als 500, die über mindestens eine funktionelle Gruppe verfügt, die mit an der Oberfläche der Pulverteilchen vorhandenen Gruppen reagieren und/oder wechselwirken kann, in Wasser und/oder einem organischen Lösungsmittel dispergiert und daraufhin das Dispergiermittel gegebenenfalls ganz oder teilweise entfernt.

2. Verfahren nach Anspruch 1, dadurch gekennzeichnet, daß das keramische Pulver aus Metall(misch)oxiden und Carbiden, Nitriden, Boriden und Carbonitriden von Metallen und Nichtmetallen und Mischungen davon ausgewählt wird und insbesondere Böhmit umfaßt.

3. Verfahren nach Anspruch 1, dadurch gekennzeichnet, daß die organische Verbindung ein Molekulargewicht von nicht mehr als 350 aufweist.

4. Verfahren nach Anspruch 1, dadurch gekennzeichnet, daß die organische Verbindung aus aliphatischen, gesättigten oder ungesättigten C₁-C₁₂ Monocarbonsäuren, Aminen der Formel R₃₋ₙNHₙ, worin n = 0, 1 oder 2 und die Reste R unabhängig voneinander Alkylgruppen mit 1 bis 12, insbesondere 1 bis 6, Kohlenstoffatomen darstellen, β-Dicarbonylverbindungen mit 4 bis 12, insbesondere 5 bis 8 Kohlenstoffatomen, modifizierten Alkoholaten und Organoalkoxysilanen ausgewählt wird.

5. Verfahren nach Anspruch 1, dadurch gekennzeichnet, daß das Dispergiermedium Wasser und/oder organische Lösungsmittel umfaßt.

6. Verfahren nach Anspruch 1, dadurch gekennzeichnet, daß 40 bis 90, und insbesondere 50 bis 80 Gew.-% Dispergiermedium, bezogen auf das Gesamtgewicht von Dispergiermedium, keramischem Pulver und organischer Verbindung, eingesetzt werden.

7. Verfahren nach Anspruch 1, dadurch gekennzeichnet, daß das Gewichtsverhältnis keramisches Pulver/organische Verbindung 100:1 bis 4:1, insbesondere 50:1 bis 8:1 beträgt.

8. Verfahren nach Anspruch 1, dadurch gekennzeichnet, daß die Dispergierung bei einer Temperatur von 20°C bis zur Siedetemperatur des Dispergiermediums, vorzugsweise bei 50 bis 100°C, durchgeführt wird.

9. Verfahren nach Anspruch 1, dadurch gekennzeichnet, daß das Dispergiermedium durch Gefriertrocknung entfernt wird.

10. Oberflächenmodifizierte nanoskalige keramische Pulver bzw. Pulverdispersionen, erhältlich nach dem Verfahren von Anspruch 1.

11. Verfahren zur Herstellung von Extrusionsmassen, dadurch gekennzeichnet, daß man Pulver bzw. Pulverdispersionen nach Anspruch 10 verwendet.

12. Verfahren nach Anspruch 11, dadurch gekennzeichnet, daß pro 100 Gew.-Teile Extrusionsmasse 20 bis 80, insbesondere 30 bis 70 Gew.-Teile oberflächenmodifiziertes Pulver, 10 bis 70, insbesondere 20 bis 60 Gew.-Teile Dispergiermedium und 0,5 bis 20, insbesondere 2 bis 15 Gew.-Teile Additive, die aus Bindemitteln, Plastifiziermitteln und Mischungen davon ausgewählt sind, eingesetzt werden.

13. Verfahren nach Anspruch 11, dadurch gekennzeichnet, daß das oberflächenmodifizierte Pulver als solches oder in Form einer Dispersion eingesetzt wird.

14. Verfahren nach Anspruch 12, dadurch gekennzeichnet, daß die Bindemittel und Plastifiziermittel aus modifizierten Cellulosen, Polyalkylenglykolen, Dialkylphthalaten und Mischungen davon ausgewählt werden.

15. Verfahren nach Anspruch 12, dadurch gekennzeichnet, daß das Dispergiermedium entfernt wird, bis ein Feststoffgehalt der Extrusionsmasse von mindestens 40 Vol.-% erreicht ist.

## Claims

1. Method of manufacturing surface-modified ceramic powders in the nanometer size range and having an average particle size of not more than 100 nm, characterized in that the unmodified powder having an average particle size of not more than 100 nm is dispersed in water and/or an organic solvent in the presence of at least one organic compound having a molecular weight of not more than 500 and having at least one functional group capable of reacting and/or interacting with groups present on the surface of said powder particles, and thereafter the dispersant is optionally removed wholly or partly.

2. Method according to claim 1, characterized in that the ceramic powder is selected from (mixed) metal oxides and carbides, nitrides, borides and carbonitrides of metals and non-metals and mixtures thereof, and particularly comprises boehmite.

3. Process according to claim 1, characterized in that said organic compound has a molecular weight of not more than 350.

4. Method according to claim 1, characterized in that said organic compound is selected from aliphatic, saturated or unsaturated C₁-C₁₂ monocarboxylic acids, amines of the formula R₃₋ₙNHₙ, wherein n = 0, 1 or 2, and the radicals R independently represent alkyl groups having 1 to 12, particularly 1 to 6 carbon atoms, β-dicarbonyl compounds having 4 to 12, particularly 5 to 8 carbon atoms, modified alcoholates and organoalkoxysilanes.

5. Method according to claim 1, characterized in that the dispersion medium comprises water and/or organic solvents.

6. Method according to claim 1, characterized in that 40 to 90, and particularly 50 to 80% by weight of dispersion medium, based on the total weight of dispersion medium, ceramic powder and low molecular weight organic compound, are employed.

7. Method according to claim 1, characterized in that the weight ratio ceramic powder/organic compound ranges from 100:1 to 4:1, particularly from 50:1 to 8:1.

8. Method according to claim 1, characterized in that the dispersion operation is carried out at a temperature of from 20°C to the boiling temperature of the dispersion medium, preferably at from 50 to 100°C.

9. Method according to claim 1, characterized in that the dispersion medium is removed by lyophilization.

10. Surface-modified ceramic powder and powder dispersion, respectively, in the nanometer size range, obtainable according to the process of claim 1.

11. Method of manufacturing compositions for extrusion, characterized in that powders and powder dispersions, respectively, according to claim 10 are employed.

12. Method according to claim 11, characterized in that per 100 parts by weight of the composition for extrusion 20 to 80, particularly 30 to 70 parts by weight of surface-modified powder, 10 to 70, particularly 20 to 60 parts by weight of dispersion medium and 0.5 to 20, particularly 2 to 15 parts by weight of additives selected from binders, plastifiers and mixtures thereof are employed.

13. Method according to claim 11, characterized in that the surface-modified powder is employed as such or in the form of a dispersion.

14. Method according to claim 12, characterized in that the binders and plastifiers are selected from modified celluloses, polyalkylene glycols, dialkylphthalates and mixtures thereof.

15. Method according to claim 12, characterized in that the dispersion medium is removed until a solids content of the composition for extrusion of at least 40% by volume is reached.

## Revendications

1. Procédé de fabrication de poudres céramiques modifiées en surface et ayant une dimension de particules de l'ordre du nanomètre, avec une dimension moyenne des particules ne dépassant pas 100 nm, caractérisé en ce qu'on disperse la poudre non modifiée, ayant une dimension moyenne des particules ne dépassant pas 100 nm, dans de l'eau et/ou dans un solvant organique en présence d'au moins un composé organique ayant un poids moléculaire ne dépassant pas 500 et qui dispose d'au moins un groupe fonctionnel qui peut réagir et/ou agir mutuellement avec des groupes présents à la surface des particules de poudre, et ensuite, éventuellement, on élimine complètement ou partiellement l'agent dispersant.

2. Procédé selon la revendication 1, caractérisé en ce que la poudre céramique est choisie parmi des oxydes (mixtes) de métaux et des carbures, des nitrures, des borures et des carbonitrures de métaux et de non-métaux, et des mélanges de ceux-ci, et comprend en particulier de la boehmite.

3. Procédé selon la revendication 1, caractérisé en ce que le composé organique a un poids moléculaire ne dépassant pas 350.

4. Procédé selon la revendication 1, caractérisé en ce que le composé organique est choisi parmi des acides mono-carboxyliques en C₁-C₁₂, aliphatiques, saturés ou insaturés, des amines répondant à la formule R₃₋ₙNHₙ, où n = 0, 1 ou 2, et les restes R représentent indépendamment les uns des autres des groupes alkyles ayant de 1 à 12, en particulier de 1 à 6, atomes de carbone, des composés β-dicarbonyles ayant de 4 à 12, en particulier de 5 à 8, atomes de carbone, des alcoolates modifiés et des organoalcoxysilanes.

5. Procédé selon la revendication 1, caractérisé en ce que le milieu dispersif comprend de l'eau et/ou des solvants organiques.

6. Procédé selon la revendication 1, caractérisé en ce qu'on utilise de 40 à 90, et en particulier de 50 à 80 % en poids de milieu dispersif par rapport au poids total du milieu dispersif, de la poudre céramique et du composé organique.

7. Procédé selon la revendication 1, caractérisé en ce que le rapport en poids de la poudre au composé organique est de 100:1 à 4:1, en particulier de 50:1 à 8:1.

8. Procédé selon la revendication 1, caractérisé en ce qu'on effectue la dispersion à une température comprise entre 20°C et le point d'ébullition du milieu dispersif, de préférence entre 50 à 100°C.

9. Procédé selon la revendication 1, caractérisé en ce qu'on élimine le milieu dispersif par lyophilisation.

10. Poudres et dispersions de poudres céramiques modifiées en surface et ayant une dimension de particules de l'ordre du nanomètre, qu'on peut obtenir selon le procédé de la revendication 1.

11. Procédé de fabrication de masses extrudées, caractérisé en ce qu'on utilise des poudres ou des dispersions de poudres selon la revendication 10.

12. Procédé selon la revendication 11, caractérisé en ce qu'on utilise, pour 100 parties en poids de masse extrudée, 20 à 80, en particulier 30 à 70 parties en poids de poudre modifiée en surface, 10 à 70, en particulier 20 à 60 parties en poids de milieu dispersif et 0,5 à 20, en particulier 2 à 15 parties en poids d'additifs qu'on choisit parmi des liants, des agents plastifiants et des mélanges de ceux-ci.

13. Procédé selon la revendication 11, caractérisé en ce qu'on utilise la poudre modifiée en surface telle quelle ou sous la forme d'une dispersion.

14. Procédé selon la revendication 12, caractérisé en ce qu'on choisit les liants et les agents plastifiants parmi les celluloses modifiées, les polyalkylèneglycols, les phtalates de dialkyles et des mélanges de ceux-ci.

15. Procédé selon la revendication 12, caractérisé en ce qu'on élimine le milieu dispersif jusqu'à ce qu'on atteigne une teneur en solides d'au moins 40 % en volume dans la masse extrudée.
